# EUROPEAN PATENT APPLICATION

(11) **EP 2 270 480 A1**
(43) Date of publication of application: **05.01.2011**
(21) Application number: 09734458.4
(22) Date of filing: 10.04.2009
(51) Int. Cl.: G01N 23/227, G01N 1/32

(54) **ANALYTICAL METHOD**

(30) Priority: 23.04.2008 JP 2008112852
(71) Applicant: Ulvac, Inc., Chigasaki-shi Kanagawa 253-8543 (JP); Ulvac-Phi, Inc., Kanagawa Kanagawa 253-8522 (JP)
(72) Inventor: KUNIBE, Toshijyu, Chigasaki-shi Kanagawa 253-8543 (JP); SANADA, Noriaki, Kanagawa 2538522 (JP); SAKAI, Daisuke, Kanagawa 2538522 (JP)
(74) Representative: Körber, Martin Hans
(86) International application number: PCT/JP2009/057384
(87) International publication number: WO 2009/131022

(57) **Abstract**

The object of the present invention is to analyze a functional organic compound with high accuracy. In the present invention, cluster ions are accelerated so that the kinetic energy of cluster ions is less than 3.1 eV per one atom that makes up the cluster ion and the cluster ions enter a sample 18. Since the functional organic compound in the sample 18 is etched without the breakdown of the chemical structure, the functional organic compound, which has not been chemically denatured, is exposed on the surface of the sample 18. By alternately performing the etching and the surface analysis of the sample 18, or performing the surface analysis of the sample 18 while performing the etching, the sample 18 can be accurately analyzed in the depth direction.

## Description

### Technical Field

The present invention generally relates to an analytical method in which a gas cluster ion beam (GCIB) source is used as an ion beam source irradiating an analytical sample in order to analyze an organic matter in the depth direction in a surface analysis method.

### Background Art

In order to analyze the analytical sample in the depth direction (such as a composition or the chemical bonding state), the sputtering removal of a sample surface is performed by using Ar atom ions having a low energy of about several hundred volts. However, compared to the analytical sample of an organic matter, it is difficult to develop an accurate analysis in the depth direction due to the change in the composition of an Ar atom ion.

As ions substitute for Ar atom ions for performing a sputter removal of a soft sample surface, C60 ions are expected and begin to become increasingly popular. However, it has been recognized that C60 ions are not necessarily all-around. Especially, C60 ions are unsuitable for the sputtering removal of a functional organic compound such as pigment.

For example, as a functional organic material, NPB (4,4'-bis[N-(1-naphthyl-1-)-N-phenyl-amino]-biphenyl) to be used for the hole transport layer of organic EL, is a nitrogen-containing aromatic ring of low molecular weight. It was found that the irradiation of C60 ions to the organic material generates such a disadvantage that the sputtering removal does not proceed due to the decomposition of the sample molecule or the accumulation of carbon.
[Patent Document 1] Japanese Unexamined Patent Application Publication No. 2003-527729
[Patent Document 2] Japanese Unexamined Patent Application Publication No. 2005-134170

### Disclosure of the Invention

### Problems to be Solved by the Invention

An object of the present invention is to provide a measuring method that can perform an accurate surface analysis of functional organic compounds in the depth direction.

### Means for Solving the Problems

In order to solve the above- mentioned problems, the present invention is directed to an analytical method of performing an analysis of an object to be analyzed containing an organic compound arranged in a reduced-pressure atmosphere, comprising the steps of ejecting a gas from a nozzle into the reduced-pressure atmosphere to form gas clusters, ionizing the gas cluster to generate gas cluster ions, accelerating the gas cluster ions so that the kinetic energy of the gas cluster ion is less than 3.58 eV per one atom constituting the gas cluster ion, irradiating the object to be analyzed in the vacuum atmosphere with the gas cluster ions which are accelerated to perform etching, and analyzing the surface of the object to be analyzed which is etched.

The present invention is directed to the analytical method, comprising the steps of forming a magnetic field or an electric field at a position where the gas cluster ions which are accelerated pass through, and screening a size of the gas cluster ion after accelerating the gas cluster ion.

The present invention is directed to the analytical method of arranging an organic compound having a C-N bond in the chemical structure in a vacuum atmosphere and irradiating the organic compound with an X-ray, detecting secondary electrons emitted from the organic compound, and performing an analysis of the organic compound, comprising the steps of generating a gas cluster and after that, ionizing the gas cluster to generate gas cluster ions, accelerating the gas cluster ions so that the kinetic energy of the gas cluster ion is less than 3.1 eV per one atom constituting the gas cluster ion, irradiating the organic compound in the vacuum atmosphere with the gas cluster ions which are accelerated to etch the organic compound, and irradiating the surface of the organic compound, not being subjected to the etching and being left behind, with the X-ray.

The present invention is directed to the analytical method, comprising the step of, from a nozzle having an interior portion of at least one atmospheric pressure made by an introduced gas, discharging the gas into a vessel to generate the gas clusters.

The present invention is directed to the analytical method, comprising the step of introducing a rare gas into the vessel so as to generate the gas clusters of the rare gas.

The functional organic compound in the present invention is a functional material that controls the performance of a device, including (1) dye for use in color filters for liquid crystal or the like, (2) a light emitting material in flat panel displays, (3) a light-heat conversion functional material in optical disks, (4) a light-electro conversion functional material in dye-sensitized solar cells, (5) an ink material in printers and photocopiers, (6) a material (such as a hole transport material or an electron transport material) in organic EL elements, (7) sensitizers, or the like.

The structure of an example of the functional organic compound (NPB, a hole transport material) is shown below.

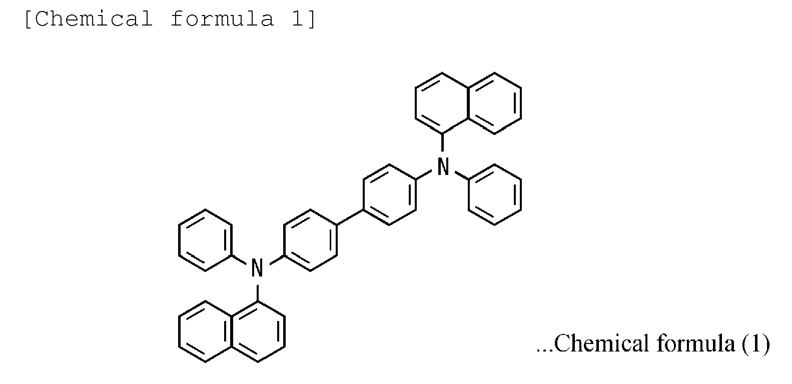

The functional organic compound has a C-C bond (including a ring-shaped structure (such as, benzene) and a chain-like structure (such as, an alkyl group)) and a C-N bond in the main skeleton. The C-N bond has a bond energy of 3.1 eV; and the C-C bond has a bond energy of 3.58 eV.

In the present invention, since the kinetic energy per one atom constituting cluster ions is set so as to be less than 3.1 eV, even when the intermolecular bond due to the Van der Waals' force is destroyed and the functional organic compound is etched, the chemical structure of the functional organic compound is not destroyed.

With regard to the carbon cluster, carbon might be left on the sample surface at the time of the etching, but when a rare gas cluster (such as, an Ar cluster) is used, the rare gas does not remain on the sample surface; and thus, the sample is not contaminated.

### Effect of the Invention

The etching can be performed without changing the chemical structure of functional organic compounds; and therefore, the surface analysis in the depth direction can be performed accurately. Since the method of performing the etching with cluster ions has a greater etching rate, as compared to cases where C60 ions or Ar single atom ions are used, the analysis in the depth direction can be performed in a shorter time.

### Brief Description of the Drawings

Fig. 1 is an example of a measuring apparatus that can be used for the method of the present invention.
Fig. 2 is a graph showing a C1s narrow spectral band in Example 1.
Fig. 3 is a graph showing an N1s narrow spectral band in Example 1.
Fig. 4 is a graph showing a C1s narrow spectral band in Comparative Example 1.
Fig. 5 is a graph showing an N1s narrow spectral band in Comparative Example 1.
Fig. 6 is a graph showing a C1s narrow spectral band in Comparative Example 2.
Fig. 7 is a graph showing an N1s narrow spectral band in Comparative Example 2.

### Explanation of Reference Numerals

10. Measuring apparatus
11. Vacuum chamber
13. X-ray irradiating apparatus
14. Photoelectron detector
18. Sample
20. Ion source
22. Ionization apparatus
23. Magnetic field-forming apparatus
30. Accelerator
31, 32. First and second extraction electrodes

### Best Modes for Carrying Out the Invention

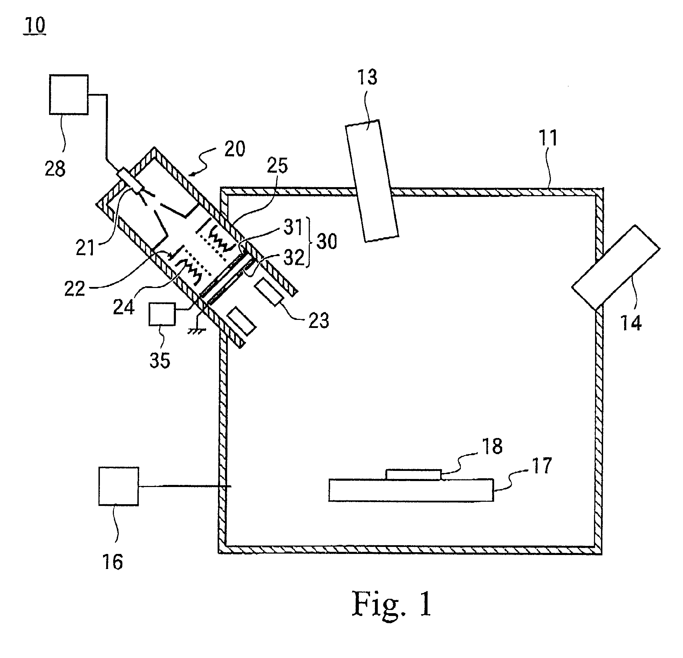

Reference numeral 10 in Fig. 1 shows a measuring apparatus that can be used in the present invention.

The measuring apparatus 10 is an apparatus for X-ray photoelectron spectroscopic analysis (ESCA: Electron Spectroscopy for Chemical Analysis, or XPS: X-ray Photoelectron Spectroscopy), and has a vacuum chamber 11, an X-ray irradiating apparatus 13, and a photoelectron detector 14.

A sample stage 17 is provided inside the vacuum chamber 11; and a sample 18 to be analyzed is arranged on the surface of the sample stage 17.

A vacuum evacuation system 16 is connected to the vacuum chamber 11. When the inside of the vacuum chamber 11 is set so as to be a vacuum atmosphere, and an X-ray is irradiated to the sample 18 on the sample stage 17 from the X-ray irradiating apparatus 13, photoelectrons are emitted from the portion of the sample 18 to which the X-ray has been irradiated.

Emitted photoelectrons are detected with the photoelectron detector 14 and the energy distribution of the photoelectrons is measured. From the kind (position) of the peak of the energy distribution, intensity ratio or the like, the qualitative analysis, the quantitative analysis, or the analysis of the chemical-bonding state of the sample 18 is possible.

Since photoelectrons generated by the irradiation of the X-ray can only move a short distance inside the sample 18, photoelectrons detected with the photoelectron detector 14 are limited to those generated in very shallow portions (shallow portions that extend up to a depth range of about several nanometers from the surface) of the surface of the sample 18 and; thus, it is possible to perform the surface analysis of the sample 18.

The measuring apparatus 10 has an ion source 20. The ion source 20 has a vessel 25, and a nozzle 21 is arranged in the bottom face of the inside of the vessel 25.

The nozzle 21 is connected to a gas-supplying system 28, and it is constituted such that, when rare gas is supplied from the gas-supplying system 28 to the nozzle 21, the rare gas is ejected inside the vessel 25.

When the rare gas is supplied to the inside of the nozzle 21 from the gas-supplying system 28, the pressure inside the nozzle 21 becomes at least atmospheric pressure. The inside of the vessel 25 is set to a vacuum atmosphere and the difference in atmospheric pressure is great inside the vessel; and, therefore, the rare gas ejected from the nozzle 21 adiabatically expands; and atoms of the rare gas agglutinate, thereby forming huge clusters of tens of atoms to about ten thousand of atoms. Here, argon gas is used as the rare gas, and argon clusters are formed.

Inside the vessel 25, an ionization apparatus 22 and an accelerator 30 are arranged between the nozzle 21 and the opening of the vessel 25 in the described order.

Since the argon cluster discharged inside the vessel 25 travels toward the opening of the vessel 25, the ionization apparatus 22 and the accelerator 30 are in a state of standing in line along the flight direction of the argon cluster.

A filament 24 is provided inside the ionization apparatus 22. The filament 24 is heated to a high temperature by applying current; and thermal electrons are emitted inside the ionization apparatus 22. The thermal electrons are irradiated by the argon cluster entering the inside of the ionization apparatus 22; and the argon cluster is ionized (formed into charged particles), thereby having a positive charge.

The accelerator 30 has first and second extraction electrodes 31, 32. The first and second extraction electrodes 31, 32 are arranged along the flight direction of the argon cluster, the first extraction electrode 31 being located on the nearer side to the ionization apparatus 22 than the second extraction electrode 32. That is, the first extraction electrode 31 is located on the upper stream side of the flight direction of the argon cluster; and the second extraction electrode 32 is located on the downstream side of the flight direction of the argon cluster.

A through-hole is formed in each of the first and second extraction electrodes 31, 32; and the ionized argon cluster goes through the through-hole of the first extraction electrode 31, flies between the first and second extraction electrodes 31 and 32, goes through the through-hole of the second extraction electrode, and goes toward the opening of the vessel 25.

The first extraction electrode 31 is connected to an acceleration power source 35. The acceleration power source 35 applies a positive high voltage to the first extraction electrode 31. The second extraction electrode 32 is grounded and is set at the same ground potential as the vacuum chamber 11.

As described above, since the argon cluster is charged positively, the argon cluster is accelerated by an acceleration electric field formed between the first and second extraction electrodes 31, 32 when the cluster flies between the first and second extraction electrodes 31, 32.

The ionized argon cluster contains a large cluster of between at least 50 atoms and at most 10000 atoms and a small cluster of less than 50 atoms.

Since each of the large cluster, the small cluster, and argon atoms that are not clustered has a positive charge, they are accelerated by the acceleration electric field and travel at a high speed toward the direction of the opening of the vessel 25.

In the traveling direction of ions (such as, the accelerated large cluster), a magnetic field-forming apparatus 23 is provided. Inside the magnetic field-forming apparatus 23, a magnetic field is formed in the direction perpendicular to the traveling direction of the ion, and the Lorentz force perpendicular to the traveling direction of the ion is applied to the ions traveling in the magnetic field.

Electric charges of ions generated in the ionization apparatus 22 are mostly monovalence (cations) regardless of the size of the cluster; and the same acceleration energy is given to each of the ions.

Accordingly, when the initial speed of the ions entering the accelerator 30 is defined as zero, the speed of ions accelerated with the accelerator 30 has a magnitude that is inversely proportional to the mass.

The magnitude of the Lorentz force applied to the ions having the same electric charge from the magnetic field is proportional to the flying speed of ions; the small cluster ions with a small mass has a high speed; and the large cluster ions with a large mass has a low speed. Therefore, the small cluster ions receive a large Lorentz force from the magnetic field, and consequently, the traveling direction thereof is largely curved. On the other hand, since the large cluster ions receive a weak Lorentz force and the mass thereof is large, the inertial force is strong. Therefore, they substantially go straight inside the magnetic field-forming apparatus 23.

The sample 18 is placed on the extended line of the straight direction of ions flying inside the ionization apparatus 22. Therefore, the small cluster ions having the curved traveling direction do not enter the sample 18, but the large cluster ions which go straight inside the magnetic field-forming apparatus 23 are irradiated on the surface of the sample 18. The flow of the large cluster ions is referred to as a cluster ion beam (GCIB).

Next, processes for analyzing the sample 18 with the above-described measuring apparatus 10 will be explained.

First, in a preliminary experiment, a cluster ion beam is generated under the same condition as that under which the sample 18 is actually analyzed, ions (large clusters) which go straight through the inside of the magnetic field-forming apparatus 23 and reach the sample stage 17 are subjected to mass analysis in order to obtain the mass of the large cluster.

The atomic weight of a gas constituting the large cluster is known; and from the atomic weight and the mass thereof, the number (average value) of atoms constituting the large cluster is obtained.

From the obtained number of atoms, an acceleration voltage is obtained so that a kinetic energy is less than 3.1 eV per one atom constituting the large cluster; and the acceleration power source 35 is set to the obtained acceleration voltage.

Here, electric charges of ions generated in the ionization apparatus 22 are mostly monovalent regardless of the size of clusters; and the kinetic energy of large clusters before entering the acceleration electric field is negligibly small; and thus, the acceleration voltage is a value obtained by multiplying the number of atoms obtained in the preliminary experiment by 3.1 eV. For example, when the average number of atoms constituting a large cluster is 2000, the acceleration voltage is less than 6.2 kV.

A vacuum atmosphere is formed inside the vacuum chamber 11; the sample 18 containing a functional organic compound is placed on the sample stage 17; and the sample 18 is placed in the vacuum atmosphere.

By applying the preset acceleration voltage to the first extraction electrode 31 and generating cluster ions while maintaining the vacuum atmosphere, a large cluster, in which the kinetic energy is less than 3.1 eV per one constituent atom, enters the sample 18.

Since the acceleration voltage is preset on the basis of the number of atoms of the large cluster, the kinetic energy of the above-described small cluster ions or argon atomic ions, which are not clustered, exceeds 3.1 eV per one atom.

However, since small clusters and argon atomic ions, which are not clustered, do not reach the sample 18, eventually cluster ions, in which the kinetic energy is at most 3.1 eV per one constituent atom, enter the sample 18.

The functional organic compound has a C-N bond and C-C bond in the main skeleton. The C-C bond has a bond energy of 3.58 eV; the C-N bond has a bond energy of 3.1 eV; and both are larger than the kinetic energy per one atom constituting the large cluster. Therefore, the sample 18 is etched without destroying the chemical structure of the functional organic compound, and the functional organic compound, which is not changed chemically, is exposed on the surface of the sample 18.

Since a new surface of the sample 18 is exposed when the surface of the sample 18 is etched in the depth direction, by alternately performing photoelectron detection through X-ray irradiation and the etching by the cluster ion beam (large cluster) irradiation, the analysis in the depth direction of the sample 18 being an organic matter can be performed. The surface analysis may be performed while irradiating the new surface with the cluster ion beam.

The case where Ar is used as the raw gas of the cluster is explained above, but the present invention is not limited to such a case. At least one kind of rare gas selected from the group consisting of Ar, Xe and Ne can be used. Further, with He, nitrogen (N₂), oxygen (O₂), CF₄, SF₆ or the like can also be used.

Although the size of the cluster ion is not particularly limited, but when the average number of constituent atoms of the cluster ion which reaches the sample 18 becomes less than 50, the etching rate of the sample 18 becomes extremely low.

The size of the cluster can be adjusted by changing the form of the nozzle 21 or the pressure inside the nozzle 21. If the amount of small clusters or ions not being clustered are negligibly small as compared to that of large clusters, small clusters or ions not being clustered may also be allowed to reach the sample 18, without arranging the magnetic field-forming apparatus 23.

Heretofore, the case where ionized large clusters are allowed to go straight has been explained, but the present invention is not limited to such a case. It may be that a magnetic field or an electric field is formed so as to curve the flight direction of ionized large clusters and the sample 18 is arranged ahead of the curved flight direction. In this case, since the flight direction of neutrons not being ionized is not curved, the sample 18 is not irradiated with the neutrons.

The composition of the accelerator 30 is also not particularly limited, and three or more extraction electrodes may be arranged. In this case, the voltage between the electrode on the farthest side from the sample 18 (uppermost stream in the flight direction) and the electrode on the nearest side to the sample (downmost stream in the flight direction) is defined as the acceleration voltage.

The present invention is not limited to the analysis of the functional organic compounds, but the present invention may also be used for the analysis of the compounds other than the functional organic compounds if the organic compounds have a C-N bond in the chemical structure.

In the case where an organic compound to be measured has no C-N bond in the main skeleton, if the kinetic energy of the cluster ion entering the sample 18 is set at less than 3.58eV per one constituent atom of the cluster ion, the etching can be performed without changing the chemical composition of the organic compound.

Summarily, the present invention is a surface analysis method in which the value of the kinetic energy per one constituent atom of the cluster ion is set so as to destroy the main skeleton of the organic compound and the sample of the organic compound is etched.

### [Examples]

NPB was deposited on the surface of a silicon substrate in order to form a sample layer consisting of NPB as a test piece. After performing the XPS analysis of the surface of the sample layer, the surface of the sample layer after the XPS analysis was etched by each of Ar cluster ions (Example 1), C60 ions (Comparative Example 1) and Ar single atom ions (Comparative Example 2), and the measurement was performed by XPS at prescribed time intervals. Meanwhile, the measurement interval was every 15 seconds in Example 1, and every 25 minutes in Comparative Examples 1 and 2.

The etching condition in Example 1, and Comparative Examples 1 and 2, the XPS measuring apparatus and its outline, and XPS measurement condition are shown below.

### <Example 1: Ar cluster ion>

Acceleration voltage of cluster ion: 5 kV
Average of cluster size (number of Ar atoms): 2000
Kinetic energy per one atom constituting cluster: 2.5 eV

### <Comparative Example 1: C60 ions>

Acceleration voltage of C60 ion: 10 kV
Irradiation extent of C60 ion: 2.0 mm × 2.0 mm
Sputtering rate: 1.79 nm/min (in terms of SiO₂)

### <Comparative Example 2: Ar⁺ ion>

Acceleration voltage of Ar⁺ ion: 500 VAr⁺
Irradiation extent of Ar⁺ ion: 2.0 mm × 2.0 mm
Sputtering rate: 1.58 nm/min (in terms of SiO₂)

### <Outline of XPS measuring apparatus>

Type of apparatus: Quantera SXM (full automatic scanning X-ray photoelectron spectroscopic analyzer, manufactured by ULVAC-PHI, Inc.)
Ultimate vacuum: 7.0 × 10⁻¹⁰ Torr
X-ray source: monochromatic AlKα (1486.6 eV)
Spectroscope: electrostatic concentric hemispherical analyzer
Detector: multi-channel system (32 Multi-Channel Detector)
Setting of neutralizing gun electron: 1.0 V (20 µA), ion: 10.0 V (7 mA)

### <XPS measurement condition (Example 1)>

X-ray beam diameter: 400 µmϕ(24.9 W, 15 kV)
Measurement area: 0.4 mmϕ
Angle of capturing signal: 45.0°
Pass energy: 46.5 eV (C1s, O1s, Si2p), 117.4 eV (N1s)

### <XPS measurement condition (Comparative Examples 1 and 2)>

X-ray beam diameter: 100 µmϕ(24.9 W, 15 kV)
Measurement area: 0.1 mmϕ
Angle of capturing signal: 45.0°
Pass energy: 112.0 eV (C1s, N1s, O1s, Si2p)

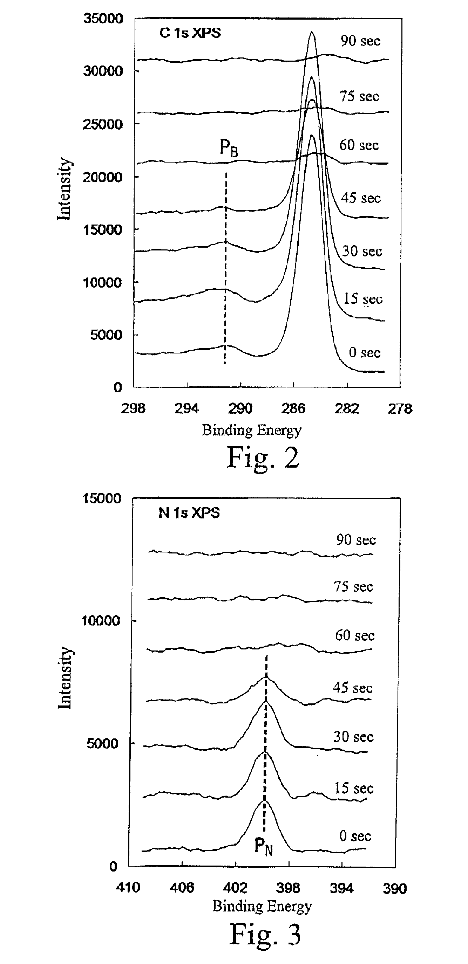

Figs. 2 to 7 are graphs showing the measurement result of the XPS analysis for each sputtering time (etching time); the abscissa axis shows the binding energy value (eV); and the ordinate axis shows the intensity (counts) of the photoelectron.

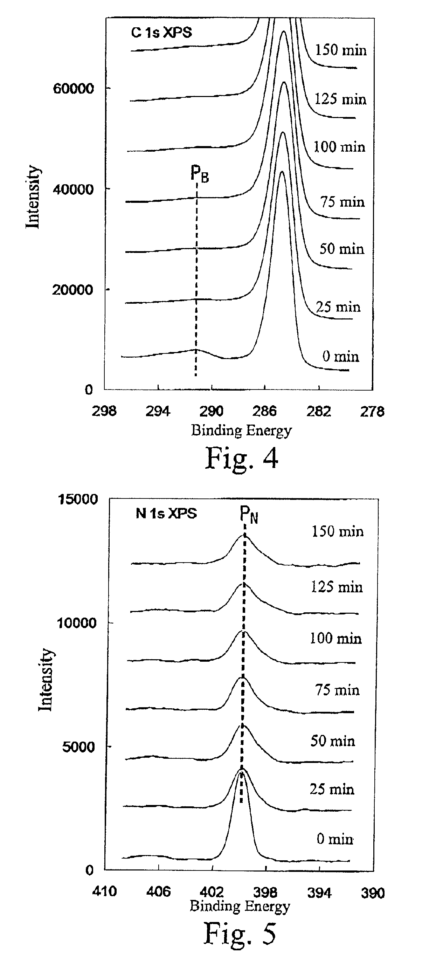

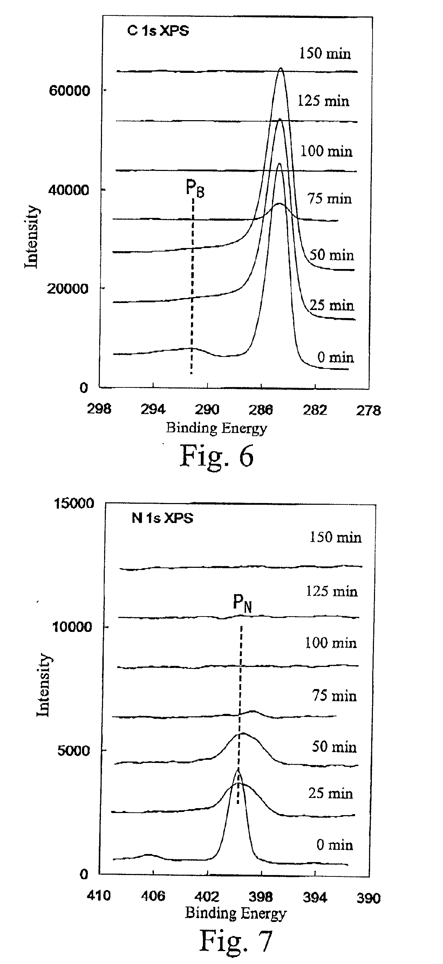

Figs. 2 and 3 correspond to Example 1; Figs. 4 and 5 correspond to Comparative Example 1; and Figs. 6 and 7 correspond to Comparative Example 2. Figs. 2, 4 and 6 show the narrow spectral band of C1s; and Figs. 3, 5 and 7 show the narrow spectral band of N1s.

In Example 1, peaks of C and N disappeared at a sputtering time of 60 seconds; and the sample layer was etched and removed (Figs. 2 and 3). In contrast, in Comparative Example 2, peaks of C and N disappeared at a sputtering time of 100 minutes (Figs 6 and 7), and in Comparative Example 1, peaks of C and N remained even after the lapse of 150 minutes (Figs. 4 and 5). From the above, it is known that the present invention has a high sputtering rate as compared to the cases where C60 ions or Ar ions are used.

Meanwhile, when the atomic concentration of the surface was measured while etching the test piece, Si was detected at 0.5 minutes or later in Example 1, but it was detected at 60 minutes or later in Comparative Example 2, and no Si was detected even after the lapse of 120 minutes in Comparative Example 1. From the above, it was also confirmed that the sputtering rate of the present application is high.

The symbol P_{B} in Figs. 2, 4 and 6 shows the position when the peak derived from a benzene ring appears; and the symbol P_{N} in Figs. 3, 5 and 7 shows the position when the peak of N1s before the sputtering appears.

In Example 1, the peak derived from a benzene ring appeared both before and after the sputtering (Fig. 2), but in Comparative Examples 1 and 2, the peak derived from a benzene ring disappeared after the sputtering (Figs. 4 and 6). Moreover, in Example 1, the appearance position of the N1s peak showed no change and also the peak width thereof showed almost no change (Fig. 3), but in contrast, in Comparative Examples 1 and 2, the width of the N1s peak broadened after the sputtering (Figs. 5 and 7). Furthermore, in Comparative Example 2, the N1s peak appearance position shifted to the higher binding energy side. This is presumably due to the fact that the chemical structure of NBP has changed and a double bond of N was formed.

Table 1 below shows the atomic composition ratio (N/(C+N)) before and after the sputtering.
[Table 1]

**Table 1: Atomic composition ratio of NBP: N/(C+N)**

| | Surface | After sputtering |
|---|---|---|
| Comparative Example 1: C60 (10 kV) | 4.0% | 1.7% |
| Comparative Example 2: Ar (500 V) | 4.3 % | 2.4% |
| Example 1: Ar Cluster (5 kV) | 4.1% | 4.5% |

In Comparative Examples 1 and 2, N decreased by nearly half after the sputtering, but in contrast, in Example 1, the amount of N did not decrease and the variation thereof was small.

From the above-described result, it is understood that, according to the present invention, functional organic compounds can be etched and removed without the chemical change thereof.

The present invention aims at etching (sputtering) an organic compound without changing the composition thereof and analyzing the exposed surface thereof. In the above-described explanation, the analytical method using an X-ray was described as an example, but the present invention can also be applied to a method of analyzing the surface by irradiation with ion and by measuring secondary ions, as SIMS.

## Claims

1. An analytical method of performing an analysis of an object to be analyzed containing an organic compound arranged in a reduced-pressure atmosphere, comprising the steps of:
ejecting a gas from a nozzle into the reduced-pressure atmosphere to form a gas cluster;
ionizing the gas cluster to generate gas cluster ions;
accelerating the gas cluster ion so that the kinetic energy of the gas cluster ion is less than 3.58 eV per one atom that makes up the gas cluster ion;
irradiating the object to be analyzed in the vacuum atmosphere with the gas cluster ions which are accelerated to perform etching; and
analyzing the surface of the object to be analyzed which is etched.

2. The analytical method according to claim 1, further comprising the steps of forming a magnetic field or an electric field at a position where the gas cluster ions which are accelerated pass through, and screening a size of the gas cluster ion after accelerating the gas cluster ion.

3. An analytical method arranging an organic compound having a C-N bond in a chemical structure in a vacuum atmosphere, irradiating the organic compound with an X-ray, detecting secondary electrons emitted from the organic compound, and performing an analysis of the organic compound, the analytical method comprising the steps of:
generating a gas cluster and after that, ionizing the gas cluster to generate gas cluster ions;
accelerating the gas cluster ions so that a kinetic energy of the gas cluster ion is less than 3.1 eV per one atom that makes up the gas cluster ion;
irradiating the organic compound in the vacuum atmosphere with the gas cluster ions which are accelerated to etch the organic compound; and
irradiating a surface of the organic compound, not being subjected to the etching and being left behind, with the X-ray.

4. The analytical method according to claim 3, further comprising the step of, from a nozzle having an interior portion of at least one atmospheric pressure made by an introduced gas, discharging the gas into a vessel to generate the gas cluster.

5. The analytical method according to claim 4, further comprising the step of introducing a rare gas into the vessel to generate a gas cluster of the rare gas.
